# EUROPÄISCHE PATENTSCHRIFT

(11) **EP 2 938 691 B1**
(45) Veröffentlichungstag und Bekanntmachung des Hinweises auf die Patenterteilung: **27.07.2022**
(21) Anmeldenummer: 13745045.8
(22) Anmeldetag: 31.07.2013
(51) Int. Cl.: C09K 3/14, C04B 35/111, B28B 1/00, B28B 3/20, B28B 7/24

(54) **SCHLEIFKORN MIT HÖCHSTENS DREI FLÄCHEN UND EINER ECKE**
ABRASIVE GRIT WITH CONCAVE SECTION
GRAIN ABRASIF AVEC UNE SECTION CONCAVE

(30) Priorität: 02.08.2012 DE 102012213633; 02.08.2012 DE 102012213627; 02.08.2012 DE 102012213630; 02.08.2012 EP 12178932
(43) Veröffentlichungstag der Anmeldung: 04.11.2015
(73) Patentinhaber: Robert Bosch GmbH, 70442 Stuttgart (DE)
(72) Erfinder: HEJTMANN, Georg, 74395 Mundelsheim (DE); STEDILE, Petra, 73732 Esslingen (DE); FUENFSCHILLING, Stefan, 78337 Öhningen (DE); ROHNER , Thomas, CH - 8546 Kefikon (CH); OLDENKOTTE , Moritz, 78464 Konstanz (DE); FREI , Donat, CH - 8500 Frauenfeld (CH); JENNI , Adrian, CH - 9000 St . Gallen (CH); PLESCHINGER , Tony, 129515 Moscow (RU); LINDEMANN ,Gert, 72805 Lichtenstein (DE); HARZER , Andreas, 71701 Schwieberdingen (DE)
(86) Internationale Anmeldenummer: PCT/EP2013/066095
(87) Internationale Veröffentlichungsnummer: WO 2014/020068

(56) Entgegenhaltungen:
- EP-A2- 0 318 168
- US-A- 5 201 916
- US-A1- 2010 146 867
- US-A1- 2010 151 195

## Beschreibung

Die vorliegende Erfindung betrifft Schleifkörner mit definierter Form, Gesamtheiten von Schleifkörnern, Verfahren zum Herstellen von Schleifkörnern, Gießformen, Schleifartikel mit Schleifkörnern, Verfahren zum Herstellen von Schleifartikeln sowie Verfahren zum Schleifen einer Oberfläche mit einem Schleifartikel.

Schleifkörner, insbesondere keramische Schleifkörner, mit definierter Form und Größe sind seit einiger Zeit bekannt.

Die US 5,201,916 offenbart unter Anderem flache Schleifkörner mit beispielsweise dreieckiger, rechteckiger oder kreisförmiger Form. Diese Schleifkörner werden aus einer Dispersion hergestellt, die in α-Aluminiumoxid konvertierbare Partikel und eine Flüssigkeit mit einer flüchtigen Komponente enthält. Die Dispersion wird in eine Gießform gegossen, die eine ebene Grundfläche und Vertiefungen aufweist, deren Formen komplementär zur gewünschten Formen der Schleifkörner sind. Anschließend wird ein Teil der flüchtigen Komponente entfernt, so dass ein Vorprodukt mit der gewünschten Form entsteht. Das Vorprodukt wird dann aus der Gießform entnommen, kalziniert und schließlich gesintert, so dass das fertige Schleifkorn entsteht.

Die mit diesem Verfahren hergestellten Schleifkörner weisen zwei gegenüberliegende Grundflächen auf, die im Wesentlichen die gleiche geometrische Form haben. Den Schleifkörnern wird eine längere Lebensdauer zugewiesen, da von den Schleifkörnern während des Schleifens ständig kleine Stücke abbrechen, so dass sich neue Schneideflächen ergeben. Die Schleifkörner schärfen sich hierdurch selbst. Von Schleifkörnern mit einer Grundfläche in Form eines Dreiecks, insbesondere eines gleichseitigen Dreiecks, wird vermutet, dass sich beim elektrostatischen Streuen etwa ein bis zwei Drittel so orientieren, dass eine Spitze von der Unterlagen weg weist, während sich weitere Schleifkörner so orientieren, dass die Spitze auf die Unterlage zu weist.

In einem in EP 615 816 beschriebenen alternativen Verfahren werden mittels Extrusion zunächst längliche, stangenförmige Vorprodukte erzeugt, die anschließend in einzelne Schleifkörner zerteilt werden. Die stangenförmigen Schleifkörner können somit beispielsweise eine Zylinder- oder Prismenform aufweisen.

In der WO 2009/085841 wird ein weiteres Herstellungsverfahren beschrieben, bei dem das Vorprodukt in der Gießform unter Bedingungen getrocknet wird, die zum Brechen des Vorprodukts führen. Die Bruchstücke weisen zumindest teilweise Oberflächen und Kanten auf, die komplementär zu den entsprechenden Oberflächen und Kanten der Gießform sind und daher den durch die Gießform definierten Winkel aufweisen. Diese Oberflächen und Kanten liefern eine erhöhte Schneidfähigkeit. Die weiteren, durch das Brechen entstandenen Oberflächen und Kanten sind hingegen unregelmäßig.

Die WO 2010/077495 offenbart Schleifkörner, die eine durchgehende oder eine nicht durchgehende Öffnung enthalten oder eine schalenartige Form aufweisen. Auch Herstellungsverfahren für derartige Schleifkörner sind dort beschrieben. Weitere Schleifkörner mit undefinierten Öffnungen sind in der WO 2010/077518 offenbart. Die WO 2010/077491 befasst sich ebenfalls mit Schleifkörnern mit einer schalenartigen Form.

Aus der WO 2010/077519 sind Schleifkörner bekannt, die zwei gegenüberliegende Hauptflächen und dazwischen verlaufende, zu den Hauptflächen geneigte Seitenflächen aufweisen. Die verschiedenen Seitenflächen eines Schleifkorns können unter verschiedenen Winkeln relativ zu den Hauptflächen geneigt sein.

Das Dokument WO 2011/068724 zeigt ebenfalls Schleifkörner, welche eine Grundseite und eine Spitze sowie dazwischen verlaufende geneigte Seitenflächen aufweisen. Ähnliche Schleifkornformen sind auch in der WO 2011/109188 beschrieben.

Das Dokument WO 2010/077509 befasst sich mit Schleifkörnern, die eine Oberfläche mit einer Vielzahl von Furchen aufweisen. Diese Furchen werden mit Hilfe von komplementären Graten an der Unterseite der Gießform erzeugt.

Die WO 2011/068714 zeigt pyramidenförmige Schleifkörner mit einer parallelogrammförmigen, insbesondere rhombischen, einer drachenförmigen und einer superelliptischen Grundfläche.

Die WO 2011/139562 offenbart Schleifkörner in Form von Tetraedern und Abwandlungen davon. Beispielsweise können die Seitenflächen konkav oder konvex ausgebildet sein, die Ecken des Tetraeders können abgestumpft sein, oder die Kanten können kurvenförmig sein.

Die in WO 2012/018903 beschriebenen Schleifkörner enthalten zwei oder mehr plattenförmige Abschnitte, welche unter einem Winkel zueinander angeordnet sind.

US 2010/146867 A1, US 2010/151195 A1 und EP 0 318 168 A2 offenbaren ein Schleifkorn mit fünf Flächen, wobei das Schleifkorn mindestens eine Kante enthält, welche an mindest einem Ende eine Ecke aufweist.

Bei dem in WO 2012/061016 beschriebenen Verfahren wird zunächst ein abrasives Gebilde hergestellt, welches Schleifkornvorprodukte enthält, die über zerbrechliche Stege miteinander verbunden sind. Nach dem Sintern werden die Schleifkörner voneinander getrennt, indem die Stege durchbrochen werden.

Alternativ können Schleifkörner definierter Form auch mit einem Siebdruckverfahren hergestellt werden. Dies beschreibt beispielsweise die WO 96/12776. Dabei wird eine dimensionsstabile Dispersion durch Öffnungen mit definierter Form auf ein Transportband geleitet und anschließend gehärtet. Die Öffnungen können beispielsweise in einem beweglichen Endlosband enthalten sein.

Eine Weiterentwicklung des Siebdruckverfahrens ist in der WO 2011/087649 offenbart. Bei diesem Verfahren wird die Dispersion mit Hilfe eines Differenzdrucks durch die Öffnungen des Endlosbandes hindurchgedrückt. Bei geeigneter Wahl der Viskosität der Dispersion können mit diesem Verfahren Schleifkörner hergestellt werden, deren Querschnitt sich von einer ersten Hauptseite zu einer zweiten gegenüberliegenden Hauptseite verjüngt.

In der WO 2012/061033 werden Verfahren zum Herstellen von Schleifkörnern definierter Form mit Hilfe von Laserstrahlung beschrieben. Zudem sind weitere spezielle Formen von Schleifkörnern offenbart. Beispielsweise können die Schleifkörner ein Hauptelement und mindestens drei sich davon erstreckende, stangenförmige Elemente enthalten. Insbesondere kann das Schleifkorn die Form eines Kreuzes, eines Großbuchstaben "T", eines Sternes oder eines griechischen Kleinbuchstaben "λ" haben.

Allgemein wird davon ausgegangen, dass Schleifkörner mit definierter Form in mehrerlei Hinsicht verbesserte Eigenschaften aufweisen: Haben die Schleifkörner bereits zum Beginn ihrer Herstellung eine definierte Form und Größe, so entfällt ein anschließender Sortierschritt, mit dem die Schleifkörner ansonsten in verschiedene Größenfraktionen aufgeteilt werden müssten. Zudem bleiben die Formen und Größen auch zwischen verschiedenen Produktionschargen nahezu unverändert, was die Schleifeigenschaften sehr gut reproduzierbar macht. Des Weiteren können die Schleifkörner beispielsweise einen erhöhten Gesamtabtrag leisten, eine längere Lebensdauer haben, eine gesteigerte Oberflächengüte der bearbeiteten Oberfläche erzeugen oder ein besser reproduzierbares Schleifergebnis liefern.

Dennoch weisen die aus dem Stand der Technik bekannten Schleifkörner eine Reihe von Nachteilen auf. Beispielsweise müssen viele Schleifkörner mit Hilfe einer aufwändigen elektrostatischen Streuung ausgerichtet auf einer Unterlage aufgebracht werden, damit beispielsweise Ecken und/oder Kanten des Schleifkorns von der Unterlage weg und damit auf eine zu bearbeitende Oberfläche hin weisen. Ohne eine derartige Ausrichtung wären der Materialabtrag und/oder die Standzeit eines Schleifartikels nur sehr gering.

Es ist daher eine Aufgabe der vorliegenden Erfindung, die Nachteile des Standes der Technik zumindest teilweise zu beheben. Insbesondere soll also ein Schleifkorn bereitgestellt werden, welches insbesondere mit Hilfe einer mechanischen Streuung mit möglichst großer Wahrscheinlichkeit in einer gewünschten Orientierung auf einer Unterlage aufgebracht werden kann. In einer gewünschten Orientierung sollte beispielsweise mindestens eine Ecke des Schleifkorns von der Unterlage weg weisen.

Die Aufgabe wird gelöst durch ein Schleifkorn mit definierter Form, wobei das Schleifkorn höchstens drei Flächen aufweist und mindestens eine Kante enthält. An mindestens einem Ende der Kante weist das Schleifkorn eine Ecke auf.

Ein Schleifkorn mit einer derartigen Form stellt sicher, dass sich das Schleifkorn insbesondere beim mechanischen Streuen auf eine Unterlage immer derart ausrichtet, dass eine Ecke und/oder eine Kante von der Unterlage absteht. Insbesondere sind keine aufwändigen Verfahren zum Ausrichten der Schleifkörner nötig (wie beispielsweise eine elektrostatische Streuung), um optimale Schleifergebnisse zu erzielen. Das Schleifkorn oder eine Mehrzahl von Schleifkörner können als Schüttgut aufgebracht werden.

Hier und im Folgenden wird unter einer Fläche ein zusammenhängender zweidimensionaler Teil der Oberfläche des Schleifkorns verstanden, der aus Punkten besteht, an denen jeweils eine wohldefinierte, gedachte Tangentialebene an das Schleifkorn angelegt werden kann. Eine solche Fläche kann eben oder krumm sein; sie kann auch mindestens einen ebenen Abschnitt und mindestens einen krummen Abschnitt aufweisen, die ohne dazwischen liegende Kante ineinander übergehen.

Eine Kante ist ein zusammenhängender eindimensionaler Teil der Oberfläche des Schleifkorns, der aus Punkten besteht, an denen zwei Flächen oder zwei Teile ein und derselben Fläche einander berühren, wobei die Tangentialebenen der beiden Flächen bzw. Flächenteile an diesen Punkten nicht stetig verlaufen. Bevorzugt liegt an der Kante ein Innenwinkel vor, der kleiner als 150°, bevorzugt kleiner als 120°, besonders bevorzugt kleiner als 90° oder grösser als 210°, bevorzugt grösser als 240°, besonders bevorzugt grösser als 270° ist. Der Innenwinkel ist dabei der Winkel zwischen den beiden genannten Tangentialebenen der beiden Flächen bzw. Flächenteile, also der Winkel zwischen den Normalenvektoren dieser Tangentialebenen.

Ein Punkt der Oberfläche des Schleifkorns wird als Ecke verstanden, wenn ein imaginärer Konus gedanklich derart über einen Teil des Schleifkorns gestülpt werden kann, dass dieser Teil des Schleifkorns im Inneren des Konus liegt und der Punkt die Spitze des Konus bildet. Bevorzugt beträgt der Öffnungswinkel des Konus weniger als 150°, weiter bevorzugt weniger als 120° und besonders bevorzugt weniger als 90°.

Das Schleifkorn kann mindestens vier Ecken, insbesondere genau vier Ecken aufweisen. Durch eine geeignete räumliche Verteilung der vier Ecken kann sichergestellt werden, dass mindestens eine Ecke sich von einer Schleifmittel-Unterlage abhebt, auf der das Schleifkorn aufliegt. Hierfür sollten beispielsweise die vier Ecken nicht in einer gemeinsamen Ebene liegen. Somit ist immer gewährleistet, dass ein optimales Schleifergebnis erhalten werden kann.

Das Schleifkorn kann mindestens zwei Kanten aufweisen, welche einander nicht berühren und welche je durch zwei Ecken begrenzt sind. Eine zwischen den eine erste Kante begrenzenden Ecken aufgespannte erste gerade Verbindung kann windschief zu einer zwischen den eine zweite Kante begrenzenden Ecken aufgespannten zweiten geraden Verbindung stehen. Bei den geraden Verbindungen handelt es sich nur um gedachte Linien, die nicht auch mit tatsächlichen Kanten des Schleifkorns übereinstimmen müssen. Dabei kann der Winkel zwischen diesen aufgespannten geraden Verbindungen 90° ± 50°, bevorzugt 90° ± 30°, besonders bevorzugt 90° ± 10°, betragen. Der Winkel zwischen windschiefen Geraden wird dabei derart gemessen, indem die beiden windschiefen Geraden derart abgebildet werden, dass das Gemeinlot, also die Gerade, welche auf beiden windschiefen Geraden senkrecht steht, als ein Punkt dargestellt wird. Es versteht sich von selbst, dass das Gemeinlot die Geraden zwischen den die Kante begrenzenden Ecken schneiden muss. Dadurch, dass das Schleifkorn zwei Kanten mit je zwei begrenzenden Ecken aufweist, deren gerade Verbindungen windschief zueinander stehen, kann sichergestellt werden, dass sich immer eine Ecke des Schleifkornes von einer Unterlage abhebt. Eine derartige Orientierung der Schleifkörner kann insbesondere auch mit einer mechanischen Streuung erreicht werden.

Bei einem Schleifkorn mit mindestens vier Ecken kann zwischen zwei Ebenen, welche durch je drei Ecken aufgespannt sind, einen Winkel zwischen 70° und 140°, bevorzugt zwischen 80° und 130°, besonders bevorzugt zwischen 90° und 120° eingeschlossen sein. Je nach Ausgestaltung des Winkels zwischen diesen Ebenen kann die Schleifcharakteristik des Schleifkorns beeinflusst werden. Bei immer gleicher Ausrichtung des Schleifkorns steht dann die abstehende Ecke des Schleifkorns beispielsweise in einem spitzen Winkel, einem rechten Winkel oder einem stumpfen Winkel von einer Unterlage ab. Unter dem Winkel zwischen den Ebenen wird dabei der Winkel zwischen den Normalenvektoren der beiden Ebenen verstanden. Es versteht sich von selbst, dass die Ebenen gebildet aus je drei Ecken des Schleifkorns nicht identisch mit den Flächen des Schleifkorns sein müssen.

Das Schleifkorn kann mindestens eine Symmetrie aufweisen. Beispielsweise kann es mindestens eine Symmetrieebene aufweisen, wobei das Schleifkorn durch eine gedachte Spiegelung an dieser Symmetrieebene in sich selbst überführt wird. Die Symmetrieebene kann beispielsweise senkrecht zu einer Geraden verlaufen, die von zwei Ecken des Schleifkorns aufgespannt wird. Alternativ oder zusätzlich kann das Schleifkorn mindestens eine Achsensymmetrie aufweisen, wobei das Schleifkorn durch eine Rotation um 180° um eine Symmetrieachse in sich selbst überführt wird. Aufgrund solcher Symmetrien kann das Schleifkorn in zwei oder mehreren verschiedenen Orientierungen auf der Unterlage angeordnet sein, die jedoch die gleiche Schleifwirkung hervorrufen Zudem kann eine Symmetrie, insbesondere das Vorliegen einer Symmetrieebene, das Herstellen eines Schleifkorns erleichtern, da somit beispielsweise zwei ähnliche oder sogar identische Gießformen verwendet werden können.

In einigen Ausführungsbeispielen, in denen das Schleifkorn genau zwei Flächen aufweist, können diese Flächen beide krumm sein. In anderen Ausführungsbeispielen, in denen das Schleifkorn genau drei Flächen aufweist, können mindestens zwei oder alle drei dieser Flächen krumm sein. Beispielsweise können die Flächen konkav oder konvex ausgebildet sein. Ebenfalls ist es denkbar, dass ein Schleifkorn lediglich eine einzige geschlossene Fläche aufweist. Beispielsweise kann ein Schleifkorn mit nur zwei Kanten und einer Fläche ähnlich einem Tetraeder ausgebildet sein, wobei jedoch nur zwei sich gegenüberliegende oder windschiefe Kanten des Tetraeders effektiv als Kanten des Schleifkorns ausgebildet sind. Die restlichen vier Kanten des Tetraeders können beispielsweise derart abgerundet sein, dass eine umlaufende, kontinuierlich gekrümmte, geschlossene Fläche entsteht.

Die Kanten des Schleifkorns können als gekrümmte Linie ausgebildet sein, wobei die Krümmung konkav oder konvex sein kann.

Die Form und die Größe des Schleifkorns können etwa mit Hilfe eines Mikroskops bestimmt werden. Das erfindungsgemäße Schleifkorn kann eine Größe im gesamten Größenbereich aufweisen, der auch für herkömmliche Schleifkörner üblich ist. Üblicherweise führen Schleifkörner mit größeren Größen zu einem höheren Materialabtrag von einer bearbeiteten Oberfläche als kleinere Schleifkörner. Beispielsweise kann das Schleifkorn eine Größe im Bereich von 100 µm bis 2000 µm haben. Diese Größe kann experimentell mit Hilfe eines Mikroskops bestimmt werden. Sie wird verstanden als der Durchmesser eines Hüllkreises des mikroskopierten Bildes des Schleifkorns, also als der kleinste Durchmesser eines Kreises, der das Bild umschließt.

Bei der oben beschriebenen Form des Schleifkorns handelt es sich um eine Idealisierung. Die Erfindung umfasst jedoch auch Schleifkörner, welche im Rahmen der Herstellungstoleranzen von dieser idealisierten Form abweichen. Mögliche Abweichungen von der idealisierten Form können eine oder mehrere der folgenden Ursachen haben:
- Hohlräume oder Bläschen aufgrund eingeschlossener Luft und/oder anderer Gase in einer Dispersion, aus der die Schleifkörner hergestellt werden;
- fehlende Ecken und/oder Kanten, welche durch ein nicht komplettes Ausfüllen einer Gießform und/oder während eines Entfernens eines Vorprodukts des Schleifkorns aus einer Gießform entstehen;
- eingefallene Seitenflächen und/oder Kanten, die durch ein Schrumpfen während des Entfernens eines Teiles der flüchtigen Komponenten der Dispersion entstehen; insbesondere eingefallene Flächen, die aus der oberen freien, nicht in Kontakt mit der Gießform stehenden Fläche der Dispersion entstehen;
- Abplatzungen, welche durch einen Trocken- und/oder einen Sinterprozess hervorgerufen werden;
- abgebrochene Ecken und/oder Kanten, welche durch einen Transport und/oder während einer Weiterverarbeitung der Schleifkörner als Schüttgut entstehen.

Die Abweichungen von der Idealisierung müssen nicht zwangsläufig zu nachteiligen Eigenschaften des Schleifkorns führen. Beispielsweise können abgebrochene Ecke und/oder Kanten auch bewirken, dass gegenüber der Idealisierung weitere Schneidkanten entstehen, die die Schleifwirkung sogar positiv beeinflussen können.

Insbesondere umfasst die Erfindung auch Schleifkörner, deren Form nur im Wesentlichen mit der idealisierten Form übereinstimmt. Beispielsweise wird ein Teil der Oberfläche des Schleifkorns auch dann als eine (einzige) Fläche angesehen, wenn dieser Teil eigentlich zwei oder mehr jeweils zusammenhängende Flächenteile enthält, die einander an einer Kante berühren, an der ein Innenwinkel eingeschlossen wird, der im Bereich von 160° bis 200°, bevorzugt von 170° bis 190°, besonders bevorzugt von 175° bis 185° liegt. Des weiteren wird ein Punkt der Oberfläche als Ecke angesehen, wenn dort eigentlich eine Krümmung vorliegt, deren Krümmungsradien jedoch höchstens 10 %, bevorzugt höchstens 5 %, besonders bevorzugt höchstens 2 % der oben definierten Größe des Schleifkorns betragen.

Bevorzugt weist das Schleifkorn aber eine wie oben beschriebene idealisierte Form auf.

Das Schleifkorn kann beispielsweise ein keramisches Material, insbesondere ein polykristallines keramisches Material, enthalten oder daraus bestehen. Bevorzugt enthält das Schleifkorn Aluminiumoxid, besonders bevorzugt α-Al₂O₃.

Alternativ oder zusätzlich kann das Schleifkorn auch noch mindestens ein weiteres Metalloxid enthalten, wie etwa Natriumoxid, Magnesiumoxid, Eisenoxid, Siliziumoxid, Kalziumoxid, Zirkonoxid, Yttriumoxid, Zinkoxid, Kobaltoxid, Nickeloxid, Hafniumoxid, Chromoxid, Praseodymoxid, Samariumoxid, Ytterbiumoxid, Neodymoxid, Lanthanoxid, Gadoliniumoxid, Ceroxid, Dysprosiumoxid, Erbiumoxid, Lutetiumoxid, Titanoxid, Manganoxid oder beliebige Kombinationen davon.

Viele dieser Metalloxide stammen von Verunreinigungen in den Ausgangsrohstoffen, wie beispielsweise in Aluminiumoxid. Bei ausreichend geringen Anteilen im Schleifkorn haben solche Verunreinigungen jedoch keinen negativen Einfluss auf die Herstellung und die Anwendung des Schleifkorns. Einige der genannten Verunreinigungen können sogar einen positiven Effekt auf das Schleifkorn haben.

Anteile von Zirkonoxid oder Yttriumoxid können beispielsweise von Mahlkugeln stammen, die in einem Mahlschritt bei der Herstellung der Schleifkörner verwendet werden können. Anteile von Eisenoxid können aus einem Mahlbehälter stammen, der bei einem solchen Mahlschritt verwendet wird.

Ebenfalls alternativ oder zusätzlich kann das Schleifkorn weitere Hartstoffe enthalten, wie beispielsweise Siliziumkarbid.

Weiterhin kann das Schleifkorn mindestens ein Zersetzungsprodukt eines unten näher beschriebenen Dispergators enthalten, der bei der Herstellung der Schleifkörner verwendet wurde. Ferner kann das Schleifkorn mindestens einen Keimbildner oder dessen Zersetzungsprodukt enthalten, welches bei der Herstellung der Schleifkörner verwendet wurde. Bei dem Keimbildner kann es sich beispielsweise um das oben bereits erwähnte Magnesiumoxid handeln.

Zudem kann das Schleifkorn auch mindestens einen der weiteren in der EP 615 816 A1 beschriebenen Stoffe enthalten.

Die genannten Inhaltsstoffe können mit Hilfe von an sich bekannten chemischen Analyseverfahren bestimmt werden.

Das Schleifkorn kann ein Gefüge mit einer oder mehreren verschiedenen Phasen enthalten oder daraus bestehen. Dabei kann eine erste Phase aus Aluminiumoxid, besonders bevorzugt aus α-Al₂O₃ bestehen. Eine zweite Phase kann aus einem oder mehreren der oben genannten weiteren Metalloxide und/oder weiteren Hartstoffe bestehen.

Der Anteil an Aluminiumoxid, insbesondere an α-Al₂O₃, im Schleifkorn kann beispielsweise mindestens 25 Gew.-%, bevorzugt mindestens 50 Gew.-%, weiter bevorzugt mindestens 70 Gew.-%, besonders bevorzugt mindestens 95 Gew.-% betragen.

Das Schleifkorn kann eine Beschichtung aufweisen, welche nur einen Teil der Oberfläche bedeckt, insbesondere nur eine oder mehrere Kanten und/oder nur einen von mehreren flächigen Bereichen der Oberfläche. Bei der Beschichtung kann es sich etwa um eine ferromagnetische oder eine paramagnetische Beschichtung handeln. Eine solche teilweise Beschichtung der Oberfläche mit einem ferromagnetischen oder einem paramagnetischen Material ermöglicht es, das Schleifkorn in einem während des Streuens angelegten Magnetfeld in einer vorgegebenen Richtung auszurichten. Alternativ kann es sich auch um eine Beschichtung aus einem Material mit einer erhöhten Wärmeleitfähigkeit handeln oder um eine Beschichtung, welche eine erhöhte Adhäsion des Schleifkorns auf der Schleifmittel-Unterlage ermöglicht.

Ein weiterer Aspekt der Erfindung betrifft eine Gesamtheit von Schleifkörnern. Unter einer Gesamtheit von Schleifkörnern wird hier und im Folgenden eine zusammengehörige Ansammlung von Schleifkörnern verstanden. Beispielsweise kann es sich dabei um eine Ansammlung von Schleifkörnern handeln, die in einem Gebinde enthalten und so gelagert und/oder transportiert werden, beispielsweise in einem Sack.

Eine solche Ansammlung von Schleifkörner kann zur Herstellung eines Schleifartikels verwendet werden. Als Gesamtheit von Schleifkörnern wird auch die Gesamtheit aller in einem Schleifartikel vorhandenen Schleifkörner angesehen.

Bevorzugt enthält die Gesamtheit von Schleifkörnern mindestens 20 Gew.-%, bevorzugt mindestens 50 Gew.-%, besonders bevorzugt mindestens 90 Gew.-% erfindungsgemäße Schleifkörner, so wie sie oben beschrieben wurden. Die übrigen in der Gesamtheit enthalten Schleifkörner können ebenfalls eine definierte Form aufweisen, welche jedoch von der erfindungsgemäßen Form abweicht, oder sie können keine definierte Form aufweisen, da es sich beispielsweise um gebrochene Schleifkörner handelt. Diese übrigen in der Gesamtheit enthalten Schleifkörner werden auch als "Stützkörner" bezeichnet.

Es ist denkbar und liegt im Rahmen der Erfindung, dass die in der Gesamtheit enthaltenen erfindungsgemäßen Schleifkörner voneinander verschieden ausgebildet sind. So kann die Gesamtheit von Schleifkörnern beispielsweise einen ersten Anteil von Schleifkörnern einer ersten erfindungsgemäßen Ausführungsform enthalten sowie einen zweiten Anteil von Schleifkörnern einer zweiten erfindungsgemäßen Ausführungsform, die von der ersten erfindungsgemäßen Ausführungsform verschieden ist. Insbesondere können sich die Schleifkörner der ersten erfindungsgemäßen Ausführungsform in ihrer Größe und/oder in ihrer Form von den Schleifkörnern der zweiten erfindungsgemäßen Ausführungsform unterscheiden.

Die Gesamtheit von Schleifkörnern kann ausschließlich aus identischen erfindungsgemäßen Schleifkörnern bestehen; insbesondere hat die Gesamtheit dann eine punktförmige Größenverteilung.

Die Gesamtheit von Schleifkörnern kann im Wesentlichen eine Größenverteilung aufweisen, die einem in der Schleifmittelindustrie üblichen Größenstandard entspricht, beispielsweise dem American National Standards Institute (ANSI), den Standards der Federation of European Producers of Abrasives (FEPA) oder dem Japanese Industrial Standard (JIS). Beispielsweise kann die Gesamtheit der Schleifkörner im Wesentlichen eine Körnung P12, P16, P20, P24, P30, P36, P40, P50, P60, P80, P100, P120, P150, P180, P220, P240, P280, P320, P360, P400, P500, P600, P800, P1000, P1200, P1500, P2000, P2500, P3000 oder P5000 gemäß dem FEPA-Standard aufweisen. Dabei bedeutet eine Größenverteilung "im Wesentlichen", dass zumindest 90 Gew.-%, bevorzugt mindestens 95 Gew.-%, weiter bevorzugt mindestens 99 Gew.-% und besonders bevorzugt sämtliche Schleifkörner der Gesamtheit von Schleifkörnern diesen Standard erfüllen.

Wie oben bereits beschrieben wurde, ist es auch denkbar, dass die Gesamtheit mindestens zwei verschiedene Anteile erfindungsgemäßer Schleifkörner und/oder mindestens einen Anteil nicht erfindungsgemäßer Schleifkörner enthält. Jeder dieser Anteile kann für sich eine Größenverteilung aufweisen, die jeweils einem der oben genannten, in der Schleifmittelindustrie üblichen Größenstandards entspricht.

Ein erfindungsgemäßes Schleifkorn oder eine erfindungsgemäße Gesamtheit von Schleifkörnern kann beispielsweise mit dem folgenden, aus US 5,201,916 bekannten Verfahren hergestellt werden:
a. Herstellung oder Bereitstellung einer Dispersion, enthaltend α-Aluminiumoxid-Partikel und/oder Partikel, welche in α-Aluminiumoxid umwandelbar sind, sowie mindestens ein flüchtiges Dispersionsmittel, bevorzugt Wasser;
b. Einfüllen der Dispersion in mindestens eine Vertiefung einer Gießform;
c. optional Abrakeln einer Oberseite der Gießform, um zumindest einen Teil der Dispersion zu entfernen, der über die Oberseite der Gießform übersteht;
d. Entfernen eines Teiles der flüchtigen Komponenten der Dispersion, so dass mindestens ein Schleifkorn-Vorprodukt entsteht;
e. Entfernen des Schleifkorn-Vorprodukts aus der Gießform;
f. optional Kalzinieren des Schleifkorn-Vorprodukts;
g. Sintern des Schleifkorn-Vorprodukts, um mindestens ein Schleifkorn zu erhalten.

Vor und/oder während der Herstellung der Dispersion im Schritt a) können die Rohstoffe, insbesondere α-Aluminiumoxid-Partikel und/oder Partikel, welche in α-Aluminiumoxid umwandelbar sind, gemahlen werden. Dies kann beispielsweise mit Hilfe einer Kugelmühle erfolgen, insbesondere mit Hilfe einer Planetenkugelmühle oder eines Attritors.

Die Dispersion kann mindestens einen Dispergator enthalten. Ein solcher Dispergator erleichtert die Bildung der Dispersion und erhöht ihre Stabilität, indem er beispielsweise Schichten um die einzelnen Körner herum bildet, die das Zusammenklumpen verhindern. Bei dem Dispergator kann es sich beispielsweise um ein Polymer handeln. In der Regel zersetzt sich der Dispergator spätestens während des Sinterns im Schritt g).

Zum Herstellen der erfindungsgemäßen Schleifkörner kann ein Gießwerkzeug verwendet werden, wobei das Gießwerkzeug mindestens eine Gießform umfasst, die mindestens eine Vertiefung mit einer jeweiligen Oberfläche aufweist, wobei die Oberfläche komplementär zur Form zumindest eines Teils der Oberfläche des Schleifkorns ist.

Die Gießform kann beispielsweise Silikon enthalten oder daraus bestehen. Die Vertiefungen können eine offene Deckfläche aufweisen, durch die die Dispersion eingefüllt werden kann. Die Vertiefungen der Gießform weisen jeweils eine Oberfläche auf, deren Form komplementär zur Form zumindest eines Teils der Oberfläche des gewünschten Schleifkorns ist.

Das im Schritt d) entstehende Vorprodukt sollte bevorzugt mechanisch stabil genug sein, um in den nachfolgenden Schritten als Schüttgut weiterverarbeitet werden zu können. Das optionale Kalzinieren in Schritt f) ist insbesondere dann vorteilhaft oder sogar erforderlich, wenn die Dispersion mehrere verschiedene Rohstoffe enthält und eine Phasenumwandlung erforderlich ist.

In einer Weiterentwicklung des aus US 5,201,916 bekannten Verfahrens ist die oben genannte Gießform vorteilhafterweise nur ein Teil eines mehrteiligen Gießwerkzeugs, welches zusätzlich mindestens ein Formelement, insbesondere eine weitere Gießform oder ein Stempelelement, umfasst, mit welchem ergänzend zu der in der ersten Gießform geformten Oberfläche zumindest ein Teil der restlichen Oberfläche des Schleifkorns formbar ist.

Bevorzugt schließen die Stempelelemente die Vertiefungen der Gießform nicht vollständig ab, so dass die flüchtige Komponente der Dispersion entweichen kann.

Kompliziertere Formen von Schleifkornkörpern sind in zusammensetzbaren Gießformen, ähnlich wie im Spritzgussverfahren, formbar. Dazu weist mindestens eine Gießform mindestens eine Einfüllöffnung auf, durch welche die Dispersion in die Vertiefungen gelangen kann.

Noch ein Aspekt der Erfindung betrifft einen Schleifartikel, welcher eine wie oben beschriebene Gesamtheit von Schleifkörnern enthält. Insbesondere können also mindestens 20 Gew.-%, bevorzugt mindestens 50 Gew.-%, besonders bevorzugt mindestens 90 Gew.-% aller Schleifkörner des Schleifartikels als erfindungsgemäße Schleifkörner ausgebildet sein, so wie sie oben beschrieben wurden. Die übrigen Schleifkörner können ebenfalls eine definierte Form aufweisen, welche jedoch von der erfindungsgemäßen Form abweicht, oder sie können keine definierte Form aufweisen.

Bei dem Schleifartikel kann es sich beispielsweise um einen beschichteten Schleifartikel (englisch: "coated abrasive"), einen Vliesschleifartikel, um einen gebundenen Schleifartikel (englisch: "bonded abrasive") oder um eine Schleifbürste handeln.

Ein beschichteter Schleifartikel enthält eine insbesondere flexible Unterlage, wie beispielsweise Papier, Vulkanfiber, eine Folie, ein textiles Material, einen Schaumstoff oder mehrschichtige Kombinationen davon. Die Schleifkörner können mit Hilfe eines Grundbinders (englisch: "make coat") an der Unterlage befestigt sein. Der Grundbinder und die Schleifkörner können mit einem Deckbinder (englisch: "size coat") überdeckt sein. Optional kann oberhalb des genannten Deckbinders auch noch ein zweiter Deckbinder vorhanden sein (englisch: "supersize coat").

Als Grundbinder, Deckbinder und zweiter Deckbinder können sämtliche an sich bekannte Bindemittel eingesetzt werden, beispielsweise aus Kunstharz, wie etwa einem Phenolharz, einem Epoxid, einem Harnstoffharz, einem Melaminharz oder einem ungesättigten Polyesterharz. Der Deckbinder und/oder der zweite Deckbinder können zudem weitere übliche Wirkstoffe und/oder Füllstoffe enthalten.

Der Schleifartikel kann in unterschiedlichen Konfektionsformen vorliegen, beispielsweise als Schleifscheibe oder als Schleifband.

Die Erfindung umfasst auch ein Verfahren zum Herstellen eines wie oben beschriebenen erfindungsgemäßen Schleifartikels. Das Verfahren enthält einen Schritt, in dem eine Gesamtheit von Schleifkörnern an und/oder in einem Substrat fixiert wird, insbesondere mittels eines Bindemittels. Bei dem Substrat kann es sich etwa um eine insbesondere flexible Unterlage eines beschichteten Schleifartikels, um ein Vliesmaterial eines Vliesschleifmittels, um eine Matrix eines gebundenen Schleifmittels oder um Borsten einer Schleifbürste handeln. Im Falle eines beschichteten Schleifartikels kann das Auftragen des Grundbinders und/oder der Schleifkörner und/oder des Deckbinders und/oder des zweiten Deckbinders mit einer an sich bekannten Methode erfolgen. Beispielsweise können die Schleifkörner elektrostatisch oder mechanisch (d. h. gravimetrisch) aufgetragen werden. Aufgrund der erfindungsgemäßen Form der Schleifkörner wird auch beim mechanischen Streuen ein großer Anteil der Schleifkörner so auf einer Schleifmittel-Unterlage orientiert, dass mindestens eine Ecke des Schleifkorns von der Unterlage weg weist. Auf eine aufwändigere elektrostatische Streuung kann also verzichtet werden.

Ferner richtet sich die Erfindung auch auf ein Verfahren zum Schleifen einer Oberfläche mit einem wie oben beschriebenen Schleifartikel. Bei der Oberfläche kann es sich insbesondere um eine lackierte Oberfläche handeln. Im Falle einer lackierten Oberfläche sind Schleifkörner mit Größen von 500 µm oder weniger besonders geeignet.

Im Folgenden wird die Erfindung mit Hilfe mehrerer Ausführungsbeispiele und Zeichnungen näher erläutert. Dabei zeigen
Figur A1a: eine perspektivische Ansicht einer ersten Ausführungsform eines erfindungsgemäßen Schleifkorns;
Figur A1b: eine Ansicht von vorn des Schleifkorns aus Figur A1a;
Figur A1c: eine Seitenansicht des Schleifkorns aus Figur A1a;
Figur A1d: eine Draufsicht des Schleifkorns aus Figur A1a;
Figur A1e: eine Seitenansicht des Schleifkorns aus Figur A1a auf einer Unterlage ausgerichtet;
Figur A2a: eine perspektivische Ansicht eines modifizierten Schleifkorns aus Figur A1a;
Figur A2b: eine Seitenansicht des Schleifkorns aus Figur A2a;
Figur A2c: einen Schnitt durch das Schleifkorn aus Figur A2a entlang einer Ebene durch zwei gegenüberliegende Ecken;
Figur A2d: eine Seitenansicht des Schleifkorns aus Figur A2a auf einer Unterlage ausgerichtet;
Figur A3a: eine perspektivische Ansicht einer weiteren Ausführungsform eines erfindungsgemäßen Schleifkorns;
Figur A3b: eine Draufsicht des Schleifkorns aus Figur A3a;
Figur A3c: eine Ansicht von vorn des Schleifkorns aus Figur A3a;
Figur A4: eine perspektivische Ansicht einer weiteren Ausführungsform eines erfindungsgemäßen Schleifkorns;
Figur A5: eine perspektivische Ansicht einer weiteren Ausführungsform eines erfindungsgemäßen Schleifkorns;

In den Figuren A1a bis 1e ist ein erfindungsgemäßes Schleifkorn 10 in einer ersten Ausführungsform dargestellt. Dabei zeigen die Figuren A1a eine perspektivische Ansicht, Figur A1b eine Ansicht von vorn, Figur A1c eine Seitenansicht, Figur A1d eine Draufsicht. Figur A1e zeigt das Schleifkorn 10 in einer Seitenansicht, wobei das Schleifkorn 10 auf einer Unterlage 20 angeordnet ist. Das Schleifkorn 10 weist einen nahezu quadratischen Grundriss mit vier Ecken 1 bis 4 und vier, die Ecken 1 bis 4 verbindende Kanten 4 bis 8 auf. Die Kanten 5 bis 8 sind dabei gerade ausgebildet, wobei auch gekrümmte Kanten denkbar sind. Ausgehend von einem ebenen Quadrat sind jedoch zwei einander gegenüberliegende Ecken 2, 4 nach oben aus der Ebene verschoben und die anderen beiden, sich ebenfalls gegenüberliegenden Ecken 1, 3 nach unten aus der Ebene verschoben. Das Schleifkorn 10 weist somit lediglich zwei Flächen 11, 12 auf. Dabei sind die beiden Flächen 11, 12 im dargestellten Ausführungsbeispiel identisch, bilden also lediglich die Oberseite bzw. die Unterseite einer einzigen Fläche. Alternativ ist es auch denkbar, dass beide Flächen einen unterschiedlichen Krümmungsverlauf aufweisen und somit zwischen den beiden Flächen 11, 12 ein Volumen einschließen.

Wie in Figur A1e ersichtlich, stellt sich das Schleifkorn 10 auf einer Unterlage 20 so auf, dass drei Ecken 1 bis 3 auf der Unterlage 20 aufliegen während die verbleibende Ecke 4 von der Unterlage 20 absteht. Die Ebene gebildet aus den drei Ecken 1, 3 und 4 steht in einem Winkel α von der Unterlage 20 ab. Der Winkel α ist dabei gleichzeitig der Winkel zwischen den beiden Ebenen gebildet durch die Ecken 1, 3 und 4 bzw. 1, 2 und 3. In der gezeigten Ausführungsform ist der Winkel α stumpf.

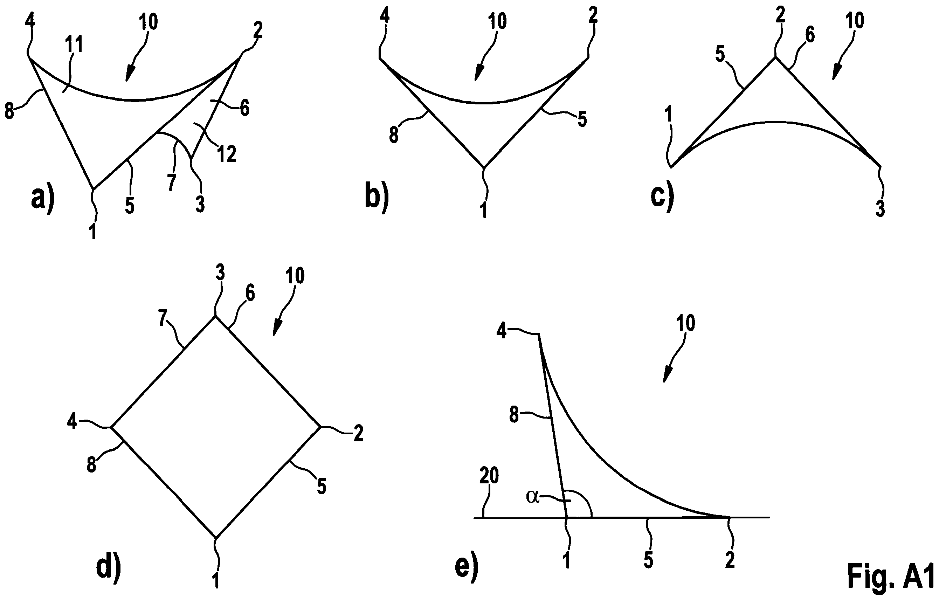

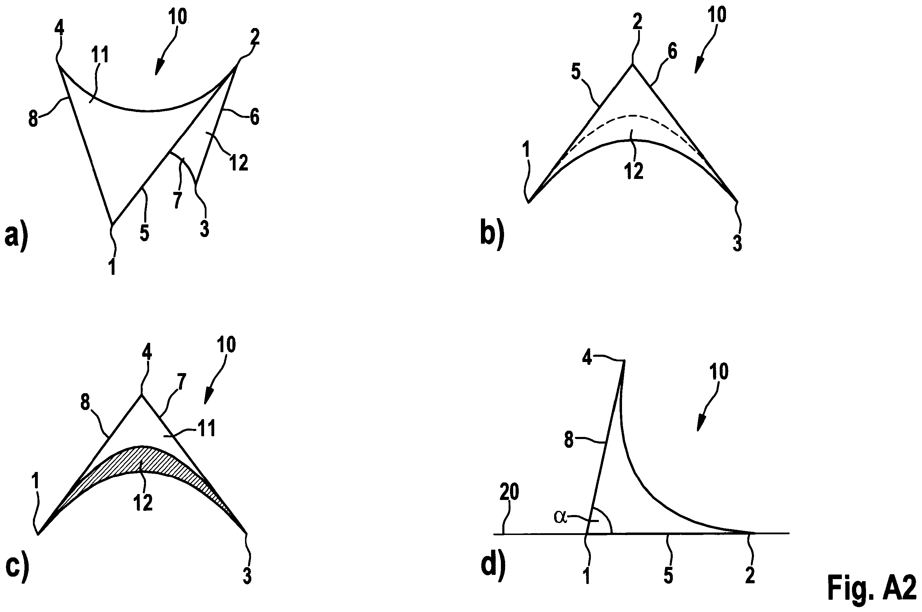

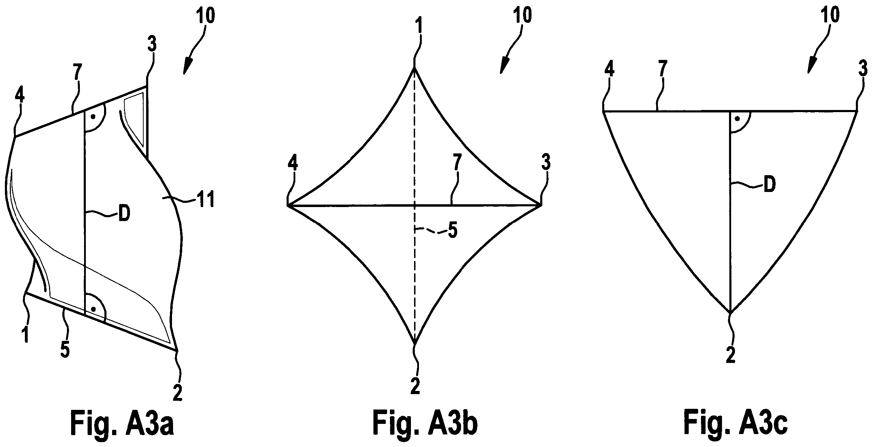

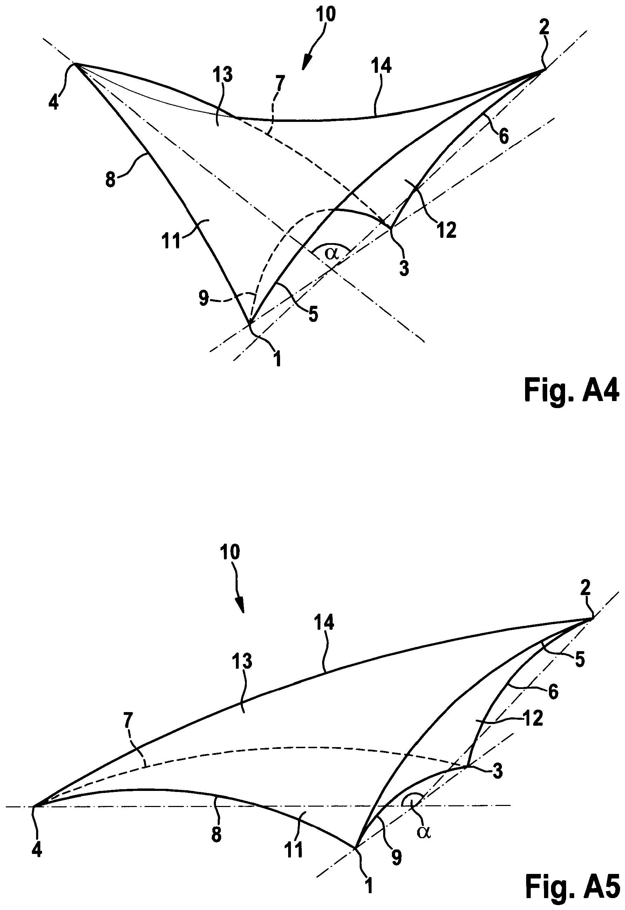

Die Figuren A2a bis A2d zeigen das Schleifkorn 10 aus Figur A1a leicht modifiziert. Die Figur A2a zeigt eine perspektivische Ansicht, Figur A2b eine Seitenansicht, Figur A2c einen Schnitt durch das Schleifkorn 10 aus Figur A2a entlang einer Ebene durch zwei gegenüberliegende Ecken 1, 3 und Figur A2d nochmals eine Seitenansicht, wobei das Schleifkorn 10 auf einer Unterlage 20 ausgerichtet ist. Die jeweils gegenüberliegenden Ecken 1, 3 bzw. 2, 4 sind dabei gegenüber der Figur A1a weiter nach oben bzw. nach unten aus der Ebene verschoben. Wie in Figur A2d dargestellt, bildet sich entsprechend ein kleinerer Winkel α zwischen der Unterlage 20 und der Ebene gebildet aus den Ecken 1, 2 und 3. Der Winkel α ist spitz. Je nach Ausgestaltung des Winkels α kann die Schleifcharakteristik des Schleifkorns 10 wesentlich beeinflusst werden. Im Schnittbild der Figur A2c ist deutlich zu erkennen, dass die beiden Flächen 11, 12 des Schleifkorns 10 ein Volumen einschließen.

In den Figuren A3a bis A3c ist eine weitere Ausführungsform eines erfindungsgemäßen Schleifkorns 10 dargestellt. Die Figur A3a zeigt eine perspektivische Ansicht, Figur A3b eine Draufsicht und Figur A3c eine Ansicht von vorn auf das Schleifkorn 10. Dieses Schleifkorn 10 weist zwei windschief zueinander stehende Kanten 5, 7 auf, welche je an ihren Enden durch je eine Ecke 1, 2 bzw. 3, 4 begrenzt sind. Das Schleifkorn 10 weist vier Ecken 1 bis 4 auf. Die beiden Kanten 5, 7 sind in einem Winkel von 90° zueinander angeordnet. Das Schleifkorn 10 weist eine einzige Fläche 11 auf, welche als kontinuierlich umlaufende krumme Fläche ausgebildet ist. Zum einfacheren Verständnis der Form kann man sich vorstellen, dass ein zylindrisches Rohrstück an beiden Enden flach abgeklemmt wird, wobei die beiden Abklemmungen zueinander senkrecht angeordnet sind und das Schleifkorn 10 durch den vom abgeklemmten Rohrstück umschlossenen Hohlraum gebildet wird. In den Figuren A3a und A3c ist schematisch das Gemeinlot eingezeichnet, welches gleichzeitig den Abstand D der windschiefen Kanten 5, 7 definiert. Dabei ist die Länge der Kanten 5, 7 gleich wie der Abstand D. Üblicherweise beträgt das Verhältnis der Kantenlänge zum Abstand D zwischen 0,5 und 2,0, bevorzugt zwischen 0,7 und 1,4, besonders bevorzugt zwischen 0,9 und 1,1. In der gezeigten Ausführungsform sind die Kanten 5, 7 derart angeordnet, dass das Gemeinlot jeweils mittig auf den Kanten 5, 7 steht. Selbstverständlich sind aber auch Schleifkörner denkbar, bei denen das Gemeinlot aus der Mitte verschoben ist. Auch müssen die Kanten 5, 7 nicht wie im Ausführungsbeispiel gezeigt gerade verlaufen, es sind durchaus auch gekrümmte Kanten denkbar.

In den Figuren A4 und A5 sind in perspektivischer Ansicht zwei weitere Ausführungsformen eines erfindungsgemäßen Schleifkorns 10 gezeigt. Diese Schleifkörner 10 weisen wiederum vier Ecken 1 bis 4 auf. Die Ecken 1 bis 4 sind jeweils über die Kanten 5 bis 6, ähnlich wie in Figur A1a untereinander verbunden. Zusätzlich sind jedoch noch zwei einander gegenüberliegende Ecken 1, 3 durch eine weitere Kante 9 verbunden. Die Kanten 5 bis 9 sind allesamt krumme Linien, es ist jedoch auch denkbar, dass die Kanten gerade sind. Zwischen den Ecken 1, 2 und 3 bzw. 1, 3 und 4 sind krumme Flächen 11, 12 aufgespannt, welche konkav ausgebildet sind. Denkbar sind auch ebene Flächen. Eine Hauptfläche 13 wird zwischen allen vier Ecken 1 bis 4 aufgespannt, welche wiederum krumm ist. Eine Scheitellinie 14 der Hauptfläche 13 ist in der Ausführungsform gemäß Figur A4 konkav ausgebildet, während die Scheitellinie 14 in Figur A5 konvex ausgestaltet ist. Die Scheitellinie 14 bildet jedoch selbst keine Kante des Schleifkorns. Die beiden Ausführungsformen gemäß den Figuren A4 und A5 unterscheiden sich außerdem durch einen Winkel a, welcher sich zwischen den Ebenen gebildet aus den Ecken 1, 2, und 3 bzw. 1, 3 und 4 aufspannt. In Figur A4 beträgt dieser Winkel α 90°, in Figur A5 beträgt der Winkel α 135°. Es versteht sich von selbst, dass dieser Winkel α jeweils auch andere Werte aufweisen kann. Die beiden Schleifkörner 10 gemäß den Figuren A4 und A5 sind außerdem symmetrisch zu einer Ebene senkrecht zu einer geraden Verbindung der Ecken 1 und 3 bzw. 2 und 4 ausgebildet. Eine solche Symmetrie erleichtert die Herstellung entsprechender Gießformen. Zudem können die Schleifkörner 10 gemäß Figuren A4 und A5 in einer ersten Orientierung auf den Ecken 1, 3 und 4 auf einer Schleifmittel-Unterlage aufliegen oder in einer zweiten Orientierung auf den Ecken 1, 2 und 3. In beiden Orientierungen sind die jeweils von der Unterlage weg weisenden Ecken 2 bzw. 4 aufgrund der Symmetrie zueinander ähnlich; die Schleifwirkung ist damit unabhängig davon, welche der beiden Orientierungen vorliegt. Außerdem sind die Schleifkörner 10 in den Figuren A4 und A5 um eine Symmetrieachse symmetrisch, die mittig zwischen den beiden Ecken 1 und 3 verläuft und die Kante 9 schneidet.

Die erfindungsgemäßen Schleifkörner können beispielsweise mit einem im Folgenden beschriebenen Verfahren hergestellt werden: Zunächst wird eine Dispersion aus 200 g α-Al₂O₃, 0,4 g MgO, 90 g Wasser als Dispersionsmittel und 0,5 g Dispergator hergestellt. Das MgO fungiert dabei als Keimbildner. Als Dispergator kann beispielsweise das Produkt Dolapix CE64, erhältlich von Zschimmer & Schwarz, 56108 Lahnstein, Deutschland eingesetzt werden. Die somit erhaltene Dispersion wird für 30 Minuten bei 200 Umdrehungen pro Minute in einer Planetenkugelmühle gemahlen, beispielsweise einer Planetenkugelmühle PM400, erhältlich von der Retsch GmbH, 42781 Haan, Deutschland. Anschließend wird die gemahlene Dispersion in eine Gießform aus Silikon eingefüllt, die Vertiefungen in der Form der gewünschten Schleifkörner enthält. Für einige Ausführungsformen des Schleifkorns kann ein wie oben beschriebenes zusätzliches Formelement verwendet werden, beispielsweise eine weitere Gießform, mit welchem ergänzend zu der in der Gießform geformten Oberfläche zumindest ein Teil der restlichen Oberfläche des Schleifkorns formbar ist. Daraufhin wird die flüchtige Komponente, also das Wasser, aus der Dispersion entfernt. Hierdurch entsteht ein Schleifkorn-Vorprodukt, welches aus der Gießform entfernt wird. In einem abschließenden Schritt wird das Vorprodukt als Schüttgut bei 1550 °C für 5 Minuten gesintert. Der Dispergator wird beim Sintern herausgebrannt.

Ein erfindungsgemäßer Schleifartikel kann beispielsweise wie folgt hergestellt werden: Auf einer Unterlage aus Vulkanfiber mit einer Dicke von 0,8 mm wird eine Phenolharz-Dispersion als Grundbinder-Vorläufer in einer Menge von 120 g/m² aufgetragen. Anschließend werden 600 g/m² der erfindungsgemäßen Schleifkörner mittels elektrostatischer Streuung aufgetragen. Daraufhin wird der Grundbinder-Vorläufer zu einem Grundbinder gehärtet. Über dem Grundbinder und den Schleifkörnern wird eine Phenolharz-Dispersion in einer Menge von 800 g/m² als Deckbinder-Vorläufer aufgetragen, welche ebenfalls gehärtet wird.

## Patentansprüche

1. Schleifkorn (10) mit höchstens drei Flächen (11, 12, 13), **dadurch gekennzeichnet, dass** das Schleifkorn (10) mindestens eine Kante (5, 6, 7, 8, 9) enthält, welche an mindest einem Ende eine Ecke (1, 2, 3, 4) aufweist.

2. Schleifkorn (10) gemäss Anspruch 1, **dadurch gekennzeichnet, dass** das Schleifkorn (10) mindestens vier Ecken (1, 2, 3, 4), insbesondere genau vier Ecken (1, 2, 3, 4) aufweist.

3. Schleifkorn (10) gemäss Anspruch 2, **dadurch gekennzeichnet, dass** das Schleifkorn (10) mindestens zwei Kanten (5, 6, 7, 8, 9) aufweist, welche einander nicht berühren, wobei die zwei Kanten (5, 6, 7, 8, 9) je durch zwei Ecken (1, 2, 3, 4) begrenzt sind und eine zwischen den eine erste Kante (5, 6, 7, 8, 9) begrenzenden Ecken (1, 2, 3, 4) aufgespannte erste gerade Verbindung in einem Winkel von 90° ± 50°, bevorzugt 90° ± 30°, besonders bevorzugt 90° ± 10°, zu einer zwischen den eine zweite Kante (5, 6, 7, 8, 9) begrenzenden Ecken (1, 2, 3, 4) aufgespannten zweiten geraden Verbindung angeordnet ist.

4. Schleifkorn (10) gemäss Anspruch 2 oder 3, **dadurch gekennzeichnet, dass** zwei Ebenen, welche durch je drei Ecken (1, 2, 3, 4) des Schleifkorns (10) aufgespannt sind, einen Winkel zwischen 70° und 140°, bevorzugt zwischen 80° und 130°, besonders bevorzugt zwischen 90° und 120° einschliessen.

5. Schleifkorn (10) gemäss einem der Ansprüche 2 bis 4, **dadurch gekennzeichnet, dass** das Schleifkorn (10) mindestens eine Symmetrie aufweist, insbesondere mindestens eine Symmetrieebene und/oder mindestens eine Symmetrieachse.

6. Schleifkorn (10) gemäss einem der vorangehenden Ansprüche, **dadurch gekennzeichnet, dass** das Schleifkorn (10) genau zwei Flächen (11, 12) aufweist, wobei beide Flächen (11, 12) des Schleifkorns (10) krumme Flächen sind.

7. Schleifkorn (10) gemäss einem der Ansprüche 1 bis 5, **dadurch gekennzeichnet, dass** das Schleifkorn (10) genau drei Flächen (11, 12, 13) aufweist, wobei mindestens zwei, insbesondere alle drei Flächen (11, 12, 13) des Schleifkorns (10) krumme Flächen sind.

8. Schleifkorn (10) gemäss einem der vorangehenden Ansprüche, **dadurch gekennzeichnet, dass** es ein keramisches Material, insbesondere ein polykristallines keramisches Material, enthält oder daraus besteht, bevorzugt Aluminiumoxid, besonders bevorzugt α-Al₂O₃.

9. Gesamtheit von Schleifkörnern (10), **dadurch gekennzeichnet, dass** sie mindestens 20 Gew.-%, bevorzugt mindestens 50 Gew.-%, besonders bevorzugt mindestens 90 Gew.-% Schleifkörner (10) nach einem der vorangehenden Ansprüche enthält.

10. Verfahren zum Herstellen mindestens eines Schleifkorns (10) oder einer Gesamtheit von Schleifkörnern (10) gemäss einem der vorangehenden Ansprüche, **gekennzeichnet durch** die folgenden Schritte:
a) Herstellung oder Bereitstellung einer Dispersion, enthaltend α-Aluminiumoxid-Partikel und/oder Partikel, welche in α-Aluminiumoxid umwandelbar sind, sowie mindestens ein flüchtiges Dispersionsmittel, bevorzugt Wasser;
b) Einfüllen der Dispersion in mindestens eine Vertiefung einer Gießform;
c) optional Abrakeln einer Oberseite der Gießform, um zumindest einen Teil der Dispersion zu entfernen, der über die Oberseite der Gießform übersteht;
d) Entfernen eines Teiles der flüchtigen Komponenten der Dispersion, so dass mindestens ein Schleifkorn-Vorprodukt entsteht;
e) Entfernen des Schleifkorn-Vorprodukts aus der Gießform;
f) optional Kalzinieren des Schleifkorn-Vorprodukts;
g) Sintern des Schleifkorn-Vorprodukts, um mindestens ein Schleifkorn (10) zu erhalten.

11. Giesswerkzeug zum Herstellen mindestens eines Schleifkorns (10) nach einem der Ansprüche 1 bis 8, wobei das Giesswerkzeug mindestens eine Giessform umfasst, die mindestens eine Vertiefung, bevorzugt eine Vielzahl von Vertiefungen, mit einer jeweiligen Oberfläche aufweist, wobei die Oberfläche komplementär zur Form zumindest eines Teils der Oberfläche des Schleifkorns (10) ist.

12. Schleifartikel, enthaltend eine Gesamtheit von Schleifkörnern (10) gemäss Anspruch 9.

13. Verfahren zum Herstellen eines Schleifartikels gemäss Anspruch 12, enthaltend einen Schritt, in dem eine Gesamtheit von Schleifkörnern (10) gemäss Anspruch 9 an und/oder in einem Substrat (20) fixiert wird, insbesondere mittels eines Bindemittels.

14. Verfahren zum Schleifen einer Oberfläche, insbesondere einer lackierten Oberfläche, mit einem Schleifartikel gemäss Anspruch 12.

## Claims

1. Abrasive grain (10) having not more than three faces (11, 12, 13), **characterized in that** the abrasive grain (10) contains at least one edge (5, 6, 7, 8, 9) having a corner (1, 2, 3, 4) at at least one end.

2. Abrasive grain (10) according to Claim 1, **characterized in that** the abrasive grain (10) has at least four corners (1, 2, 3, 4), especially exactly four corners (1, 2, 3, 4).

3. Abrasive grain (10) according to Claim 2, **characterized in that** the abrasive grain (10) has at least two edges (5, 6, 7, 8, 9) that are not in contact with one another, the two edges (5, 6, 7, 8, 9) each being bounded by two corners (1, 2, 3, 4) and a first straight connecting line formed between the corners (1, 2, 3, 4) that bound a first edge (5, 6, 7, 8, 9) being arranged at an angle of 90° ± 50°, preferably 90° ± 30°, more preferably 90° ± 10°, with respect to a second straight connecting line formed between the corners (1, 2, 3, 4) that bound a second edge (5, 6, 7, 8, 9).

4. Abrasive grain (10) according to Claim 2 or 3, **characterized in that** two planes that are formed by three corners (1, 2, 3, 4) each of the abrasive grain (10) form an angle between 70° and 140°, preferably between 80° and 130°, more preferably between 90° and 120°.

5. Abrasive grain (10) according to any of Claims 2 to 4, **characterized in that** the abrasive grain (10) has at least one feature of symmetry, especially at least one plane of symmetry and/or at least one axis of symmetry.

6. Abrasive grain (10) according to any of the preceding claims, **characterized in that** the abrasive grain (10) has exactly two faces (11, 12), the two faces (11, 12) of the abrasive grain (10) being curved faces.

7. Abrasive grain (10) according to any of Claims 1 to 5, **characterized in that** the abrasive grain (10) has exactly three faces (11, 12, 13), at least two and especially all three faces (11, 12, 13) of the abrasive grain (10) being curved faces.

8. Abrasive grain (10) according to any of the preceding claims, **characterized in that** it comprises or consists of a ceramic material, especially a polycrystalline ceramic material, preferably alumina, more preferably α-Al₂O₃.

9. Collective of abrasive grains (10), **characterized in that** it comprises at least 20% by weight, preferably at least 50% by weight, more preferably at least 90% by weight, of abrasive grains (10) according to any of the preceding claims.

10. Process for producing at least one abrasive grain (10) or a collective of abrasive grains (10) according to any of the preceding claims, **characterized by** the following steps:
a) producing or providing a dispersion comprising α-alumina particles and/or particles that can be converted to α-alumina, and at least one volatile dispersion medium, preferably water;
b) introducing the dispersion into at least one depression of a die;
c) optionally squeegeeing an upper face of the die in order to remove at least a portion of the dispersion which stands above the upper face of the die;
d) removing a portion of the volatile components of the dispersion, so as to form at least one abrasive grain precursor;
e) removing the abrasive grain precursor from the die;
f) optionally calcining the abrasive grain precursor;
g) sintering the abrasive grain precursor in order to obtain at least one abrasive grain (10).

11. Casting mold for producing at least one abrasive grain (10) according to any of Claims 1 to 8, wherein the casting mold comprises at least one die having at least one depression, preferably a multitude of depressions, having a particular surface, the surface being complementary to the shape of at least part of the surface of the abrasive grain (10).

12. Abrasive article comprising a collective of abrasive grains (10) according to Claim 9.

13. Process for producing an abrasive article according to Claim 12, comprising a step in which a collective of abrasive grains (10) according to Claim 9 is fixed on and/or in a substrate (20), especially by means of a binder.

14. Process for grinding a surface, especially a painted surface, with an abrasive article according to Claim 12.

## Revendications

1. Grain abrasif (10) comportant au plus trois surfaces (11, 12, 13), **caractérisé en ce que** le grain abrasif (10) contient au moins une arête (5, 6, 7, 8, 9) qui présente un coin (1, 2, 3, 4) au niveau d'au moins une extrémité.

2. Grain abrasif (10) selon la revendication 1, **caractérisé en ce que** le grain abrasif (10) présente au moins quatre coins (1, 2, 3, 4), en particulier exactement quatre coins (1, 2, 3, 4).

3. Grain abrasif (10) selon la revendication 2, **caractérisé en ce que** le grain abrasif (10) présente au moins deux arêtes (5, 6, 7, 8, 9) qui ne se touchent pas l'une l'autre, les deux arêtes (5, 6, 7, 8, 9) étant chacune délimitées par deux coins (1, 2, 3, 4) et une première liaison droite tendue entre les coins (1, 2, 3, 4) délimitant une première arête (5, 6, 7, 8, 9) étant agencée à un angle de 90° ± 50°, préférablement 90° ± 30°, particulièrement préférablement 90° ± 10°, par rapport à une deuxième liaison droite tendue entre les coins (1, 2, 3, 4) délimitant une deuxième arête (5, 6, 7, 8, 9).

4. Grain abrasif (10) selon la revendication 2 ou 3, **caractérisé en ce que** deux plans qui sont tendus par à chaque fois trois coins (1, 2, 3, 4) du grain abrasif (10), forment un angle compris entre 70° et 140°, préférablement entre 80° et 130°, particulièrement préférablement entre 90° et 120°.

5. Grain abrasif (10) selon l'une quelconque des revendications 2 à 4, **caractérisé en ce que** le grain abrasif (10) présente au moins une symétrie, en particulier au moins un plan de symétrie et/ou au moins un axe de symétrie.

6. Grain abrasif (10) selon l'une quelconque des revendications précédentes, **caractérisé en ce que** le grain abrasif (10) présente exactement deux surfaces (11, 12), les deux surfaces (11, 12) du grain abrasif (10) étant des surfaces courbes.

7. Grain abrasif (10) selon l'une quelconque des revendications 1 à 5, **caractérisé en ce que** le grain abrasif (10) présente exactement trois surfaces (11, 12, 13), au moins deux, en particulier toutes les trois surfaces (11, 12, 13) du grain abrasif (10) étant des surfaces courbes.

8. Grain abrasif (10) selon l'une quelconque des revendications précédentes, **caractérisé en ce qu'**il contient un matériau céramique, en particulier un matériau céramique polycristallin, préférablement de l'oxyde d'aluminium, particulièrement préférablement du α-Al₂O₃, ou qu'il en est constitué.

9. Ensemble de grains abrasifs (10), **caractérisé en ce qu'**il contient au moins 20 % en poids, préférablement au moins 50 % en poids, particulièrement préférablement au moins 90 % en poids de grains abrasifs (10) selon l'une quelconque des revendications précédentes.

10. Procédé pour la préparation d'au moins un grain abrasif (10) ou d'un ensemble de grains abrasifs (10) selon l'une quelconque des revendications précédentes, **caractérisé par** les étapes suivantes :
a) préparation ou mise à disposition d'une dispersion contenant des particules d'oxyde d'aluminium α et/ou des particules qui sont transformables en oxyde d'aluminium a, ainsi qu'au moins un agent de dispersion volatil, préférablement de l'eau ;
b) remplissage d'au moins un évidement d'un moule avec la dispersion ;
c) éventuellement, raclage d'une face supérieure du moule afin d'éliminer au moins une partie de la dispersion qui dépasse de la face supérieure du moule ;
d) élimination d'une partie des composants volatils de la dispersion, de sorte qu'au moins un pré-produit de grain abrasif soit produit ;
e) élimination du pré-produit de grain abrasif du moule ;
f) éventuellement calcination du pré-produit de grain abrasif ;
g) frittage du pré-produit de grain abrasif, afin d'obtenir au moins un grain abrasif (10).

11. Outils de moulage pour la préparation d'au moins un grain abrasif (10) selon l'une quelconque des revendications 1 à 8, l'outil de moulage comprenant au moins un moule qui présente au moins un évidement, préférablement une pluralité d'évidements, comportant une surface respective, la surface étant complémentaire à la forme d'au moins une partie de la surface du grain abrasif (10).

12. Article abrasif, contenant un ensemble de grains abrasifs (10) selon la revendication 9.

13. Procédé pour la préparation d'un article abrasif selon la revendication 12, contenant une étape dans laquelle un ensemble de grains abrasifs (10) selon la revendication 9 est fixé sur et/ou dans un substrat (20), en particulier au moyen d'un liant.

14. Procédé d'abrasion d'une surface, en particulier d'une surface peinte, avec un article abrasif selon la revendication 12.
